# EUROPEAN PATENT APPLICATION

(11) **EP 4 599 683 A1**
(43) Date of publication of application: **13.08.2025**
(21) Application number: 25155658.5
(22) Date of filing: 03.02.2025
(51) Int. Cl.: A23B 2/05, A23B 80/00, A23G 1/00, A23G 1/04, A23G 3/34, A23G 3/02, A23G 7/00, G05D 23/19, H05B 6/02, H05B 6/06, A23B 2/46

(54) **METHOD AND DEVICE FOR CONVEYING FOOD PRODUCTS**

(30) Priority: 06.02.2024 IT 202400002473
(71) Applicant: Piovan S.P.A., 30036 Santa Maria di Sala (VE) (IT)
(72) Inventor: ZUPPICHIN, Filippo, 35031 Abano Terme (PD) (IT)
(74) Representative: Luppi Intellectual Property S.r.l.

(57) **Abstract**

Herein described are a conveying method and apparatus for conveying a food product which melts at a temperature below 90 °C, for example chocolate, or cocoa, or semifinished cocoa products, wherein the conveying occurs along a conveying tube which is heated by means of an induction device to maintain the food product in the molten state, wherein the induction device is feedback regulated to maintain at least one temperature detected along the conveying tube at a desired value.

## Description

### Background of the invention

The invention relates to a method and a device for conveying food products, in particular in the creamy or semi-liquid state, such as dark chocolate or other types of chocolate, cocoa or semi-finished cocoa products, chocolate or cocoa-based creams, fats, cow butter or other types of butter, vegetable oils, soy lecithin, hazelnut cream, sauces, purees, creams for fillings, pastry creams, or creams in general, condiments or sauces for the food industry, in particular confectionery.

Specifically but not exclusively, the invention can be used for conveying food products (raw materials or semi-finished products) in the creamy or semi-liquid state, in particular with a melting point below 90 °C, so as to maintain the food product at a temperature above an ambient temperature so as to allow the conveying in the molten state (creamy or semi-liquid in general) of food products that are solid at ambient temperature, or to reduce the viscosity of food products which are already in the molten state (creamy or semi-liquid in general) at ambient temperature so as to facilitate the conveying of the products.

In the food industry, for the conveying of a food product in the creamy or semi-liquid state, it is known to maintain the conveyed food product in the molten state and with low viscosity by heating a conveying tube.

The heating should be carried out in a controlled manner so as to prevent the temperature of the food product, on the one hand, from nearing the solidification point, or leading to an excessive increase in the viscosity of the product, losing the fluidity required for the conveying, and, on the other hand, from reaching an excessive temperature which could degrade or damage the product.

To this end, it is known to maintain the temperature of the conveying tube at a desired value by means of water at controlled temperature which flows outside the tube. The water may flow directly in contact with the outer surface of the conveying tube, or by interposing a separation jacket between the tube and the water at controlled temperature (with lower thermal efficiency but with a lower risk of contaminating the product).

Generally, the tempered water is produced in a thermal plant and from here it is distributed towards the areas of use with a hydraulic network. This known temperature control system is rather complex and expensive.

### Summary of the invention

An object of the invention is to provide a solution capable of overcoming one or more of the limits and drawbacks of the prior art mentioned above.

An object is to provide alternative conveying method and/or apparatus with respect to those of the prior art for conveying a food product in the creamy or semi-liquid state, in particular a food product (for example chocolate, cocoa and semi-finished cocoa products, creams, butter, etcetera) which solidifies at ambient temperature, or which has a high viscosity at ambient temperature.

An object is to provide a conveying method and/or apparatus capable of ensuring both the fluidity of the food product suitable for the conveying, and maintaining the wholeness of the quality of the food product.

An advantage is to provide a conveying method and/or apparatus that are capable of carrying out a precise control of the temperature of the conveyed food product and which have a relatively high efficiency.

An advantage is to provide a solution, for controlling the temperature of a food product in the creamy or semi-liquid state pumped along a conveying tube, with a relatively low thermal dispersion.

These and other objects are attained by a method and/or an apparatus according to one or more of the claims reported below.

In an example, a food product, in particular a food product which melts at a temperature below 90 °C, is pumped along a conveying tube which is heated by means of an induction device to maintain the food product in the molten state (creamy or semi-liquid), wherein the induction device is feedback regulated to maintain at least one temperature detected along the conveying tube at a desired value. The desired value may in particular be a value above an ambience temperature and/or a value below 90 °C and/or a value not below a melting temperature of the food product.

### Brief description of the drawings

The invention will be clearer and implemented with reference to the to the attached drawings which show an exemplifying and non-limiting embodiment thereof, wherein:

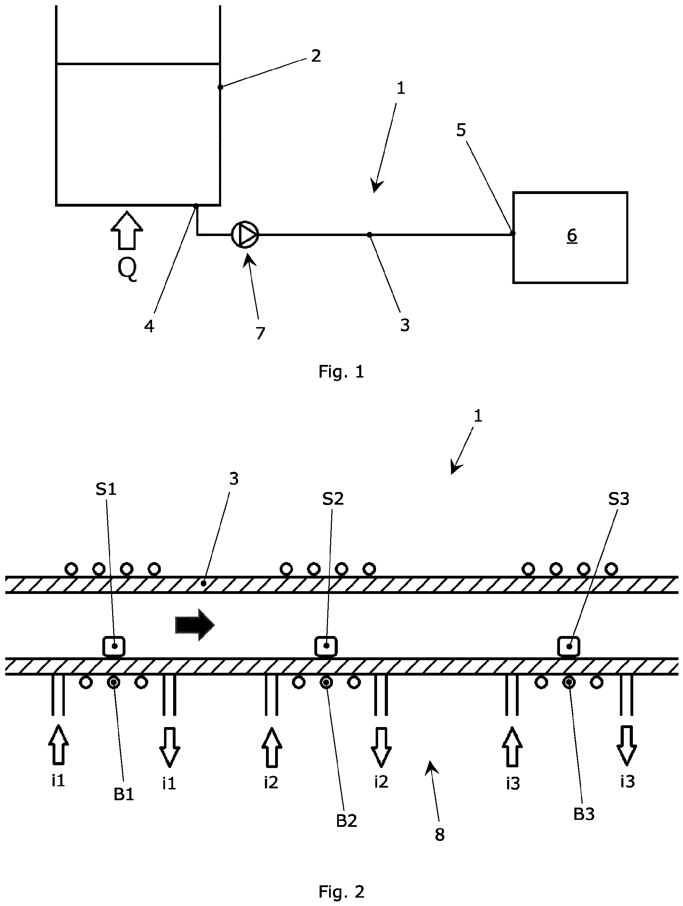

Figure 1 is a diagram of an industrial plant for processing a food product wherein the industrial plant comprises an example of a conveying apparatus made according to the present invention;
Figure 2 schematically shows a longitudinal cross-section of a section of the conveying apparatus of Figure 1.

### Detailed description

With reference to the figures mentioned above, a conveying apparatus suitable for the conveying of food product in the creamy or semi-liquid state has been indicated in their entirety with 1. The food product may in particular be a product which, at ambient temperature, is solid or in a fluid or semi-fluid state with a high viscosity which makes the conveying thereof complex. The food product may in particular be a product which melts at a temperature below 90 °C.

The food product may in particular comprise a product selected from a group comprising: milk chocolate or dark chocolate or other types of chocolate, cocoa or semi-finished cocoa products, chocolate-based creams, fats, cow butter or other types of butter, vegetable oils, soy lecithin, hazelnut cream, sauces, purees, creams for fillings, pastry creams, or other creams, condiments or sauces for the food industry, in particular confectionery.

In the specific example described herein, the food product processed is dark chocolate (with melting temperature comprised between about 50 and 55 °C), or milk chocolate (with melting temperature comprised between 45 and 50 °C), or white chocolate (with melting temperature comprised between 40 and 45 °C).

The conveying apparatus 1 is included in a plant for processing the food product which may in particular comprise a container 2 for the food product and heating means configured to provide heat Q suitable to maintain the food product contained in the container 2 at a desired temperature, for example a temperature below 90 °C and/or a temperature not below a melting temperature of the food product and/or a temperature above an ambient temperature. The container 2 may in particular be at ambient pressure.

The heating means may in particular comprise induction means, or means that use a tempered liquid arranged outside container, or other types of means (for example heating means of the known type). The container 2 may in particular be provided with mixing means (not shown, for example, mechanical mixing means, with agitator blades) configured to mix (for example, continuously) the food product in the container 2.

The conveying apparatus 1 comprises a conveying tube 3 with an inlet 4 and an outlet 5 for conveying the food product in the molten state.

The inlet 4 of the conveying tube 3 is placed in fluid communication with the internal of the container 2 to receive the food product contained in the container. The outlet 5 of the conveying tube 3 may in particular be placed in communication with a further operative apparatus 6 of the plant for processing the food product arranged downstream of the conveying tube 3 to receive the food product for the subsequent processing operations.

The conveying tube 3 may be built so as to have, in particular, a relatively very low magnetism, that is so as to be substantially non-ferromagnetic. In particular, the conveying tube 3 may have a relative magnetic permeability µr ≤ 10, or µr ≤ 8, or µr ≤ 6, or µr ≤ 4, or µr ≤ 2, considering that the relative magnetic permeability µr is measured with a magnetizing field H = 200 Aim and a tube temperature of 40 °C.

The conveying tube 3 may in particular be made of austenitic stainless steel, for example AISI 304, or made of other material suitable for contact with food products and with a relatively low magnetic permeability.

The conveying apparatus 1 comprises pumping means 7 configured to pump the food product in the molten state along the conveying tube 3 from the inlet 4 to the outlet 5. The pumping means 7 may in particular comprise a pump suitable for pumping viscous liquids (for example, chocolate in the molten state). The pump may in particular comprise a volumetric pump, such as for example a rotary volumetric pump (in particular, a gear pump). However, there can be provided for the use of another type of pump (also of the known type).

The conveying apparatus 1 comprises an induction device 8 configured to heat the conveying tube 3. The induction device 8 in particular serves to maintain the food product in the molten state inside the conveying tube 3. The induction device 8 may in particular comprise at least one induction coil B1, B2, B3, ..., wound around at least one section of the conveying tube 3. Each induction coil B1, B2, B3, ..., may in particular have a winding pitch (in particular, a constant winding pitch) greater than 2 cm, or greater than 3 cm, or greater than 4 cm. The winding pitch may in particular be comprised in a range of 4.5 ± 1.5 cm, or comprised in a range of 4.5 ± 0.5 cm.

The induction device 8 may in particular comprise two or more device portions which are arranged along the conveying tube 3. The two or more device portions may in particular be arranged spaced apart from each other in the direction of the length of the conveying tube 3. Each of the two or more device portions mentioned above may in particular comprise at least one induction coil B1, B2, B3, ..., arranged outside a corresponding section of the conveying tube 3.

The conveying apparatus 1 comprises sensor means configured to measure at least one temperature along the conveying tube 3. The sensor means may in particular comprise at least one temperature transducer S1, S2, S3, ... (for example of the resistor type, or of the thermographic type, or of the thermocouple type, or of another type), arranged to detect at least one temperature inside the conveying tube 3.

The sensor means may in particular comprise two or more temperature transducers S1, S2, S3, ..., each of which is operatively associated with a corresponding device portion and/or a corresponding induction coil B1, B2, B3. The temperature transducers S1, S2, S3, ..., may in particular be arranged spaced apart from each other in the direction of the length of the conveying tube 3.

The conveying apparatus 1 comprises control means (electronic and programmable, for example an electronic processor) configured to feedback regulate the induction device 8 so as to maintain at least one temperature measured by the sensor means at a desired value. This desired value may in particular be below 90 °C. This desired value may in particular be not below a melting temperature of the food product. This desired value may in particular be above an ambient temperature.

The control means may in particular be configured to carry out a feedback control of the induction device 8 by regulating a frequency of the alternating current, or through a pulse regulation (that is by periodically activating and deactivating the magnetic field, with a width and/or frequency modulation of the pulses), or by combining the two regulation methods mentioned above, or with other methods.

As observed above, the sensor means may in particular be configured to measure the temperature at two or more detection points distant from each other along the conveying tube. As seen, the sensor means may in particular comprise a plurality of temperature transducers S1, S2, S3, ..., each associated with a respective temperature detection point.

Each of the two or more device portions of the induction device 8 may in particular be operatively associated with the at least one respective temperature detection point. The control means may in particular be configured to feedback regulate the two or more device portions mentioned above independently of each other, so that the temperature in each of the two or more detection points mentioned above is maintained at a desired value, for example a value below 90 °C and not below a melting temperature of the food product.

In particular, there may be provided for electricity generation means configured so that, for each induction coil B1, B2, B3, ..., there is generated an alternating current i1, i2, i3, ..., which flows in the conductor of the respective induction coil B1, B2, B3, ..., and which creates, for each induction coil B1, B2, B3, a respective variable magnetic field which induces a heating (which will depend on the intensity of the variable magnetic field) of the section of the conveying tube associated with the respective induction coil B1, B2, B3.

Each alternating current i1, i2, i3, ..., may in particular be controlled independently of the others, so that the various values of the alternating current i1, i2, i3, ..., in the induction coils B1, B2, B3, ..., may be different from each other and the heating provided may therefore be different for each section of the conveying tube 3.

The operation of the conveying apparatus 1 implements a conveying method which comprises the step for supplying the food product in the molten state to an inlet 4 of a conveying tube 3. Furthermore, there is provided for a step for pumping (in particular, continuously) the food product along the conveying tube 3 from the inlet 4 to an outlet 5. Furthermore, during the pumping step there is provided for a step for heating the conveying tube 3 by means of an induction device 8 so as to maintain the food product in the molten state.

The induction device 8 is feedback regulated, based on the temperature measurement carried out by sensor means on the conveying tube 3, so as to maintain the detected temperature at a desired value (value below 90 °C and not below a melting temperature of the food product).

The measuring step may in particular comprise the temperature in a plurality of detection points spaced apart from each other along the conveying tube 3. The temperature detection points may, in particular, be equally spaced apart from each other. The temperature detection points may in particular be arranged at an average distance from each other which is greater than 50 cm, or greater than 100 cm, or greater than 200 cm, or greater than 300 cm.

The induction device 8 may in particular be feedback regulated to maintain each of the detected temperatures at a desired value (for example, the same value for all detection points, in particular a value below 90 °C and not below a melting temperature of the food product).

As observed above, the induction device 8 may comprise a plurality of induction coils B1, B2, B3, ..., which may be regulated independently of each other, so that the heat supplied to each section of the conveying tube 3 may differ from one section to the other, with the aim of ensuring an effective and safe (in particular, even) control of the desired temperature throughout the length of the conveying tube and therefore ensure that the food product is maintained at a temperature which is simultaneously suitable for conveying and safe for the wholeness of the product.

As observed above, the induction device 8 may comprise two or more device portions each of which is operatively associated with at least one respective temperature detection point and it is feedback regulated to maintain the temperature of the respective detection point at a desired value, wherein this desired value may in particular be below 90 °C and not below a melting temperature of the food product.

The food product (coming from the container 2 of the processing plant) may be supplied to the inlet 4 of the conveying tube 3 at a controlled temperature, for example above 35 °C and/or below 90 °C.

As mentioned, the desired temperature value may be below 90 °C. However, it may be provided for that the desired temperature value be below 80 °C, or below 70 °C, or below 60 °C, or below 55 °C. The desired temperature value may in particular be above an ambient temperature and/or not below a melting temperature of the food product. The desired temperature value may in particular be above 35 °C, or above 40 °C.

The food products, which can be processed by the processing plant and which can be conveyed by the conveying apparatus 1, may comprise products of various kind, in particular products with a viscosity (considered at 45 °C) comprised between 100 and 8000 mPa*s. More particularly, the food products may have a viscosity (at 45 °C) comprised between 1600 and 8000 mPa*s, or comprised between 2500 and 6000 mPa*s, or comprised between 2500 and 8000 mPa*s, or comprised between 1600 and 6000 mPa*s.

It was observed that the induction device 8 (which may comprise one or more induction coils B1, B2, B3 ,..., arranged outside the conveying tube 3) allows to substantially eliminate the risk of contamination of the food product.

Furthermore, there can be obtained a rather even regulation of the temperature throughout the length of the conveying tube 3.

As mentioned, the conveying tube 3 may be made of a low magnetic permeability material (for example, austenitic steel), without having to provide a tubular coating layer made of ferromagnetic material applied on the outer surface of the tube to increase the magnetic properties of the conveying tube 3. However, there can be provided for a conveying apparatus 1, not shown, comprising the tubular coating layer made of ferromagnetic material mentioned above.

Furthermore, there may be provided a tubular thermal insulating layer (not shown) outside the induction coil B1, B2, B3.

Furthermore, there may be provided a tubular protection layer (not shown), in particular made of non-magnetic material (in particular, metal, for example aluminum), outside the tubular thermal insulating layer. The tubular protection layer (in particular, non-magnetic) may increase the thermal effect of the induction coil B1, B2, B3, ..., and/or hinder dissipation of heat towards the external.

The characteristics of each variable electromagnetic field generated by the induction device 8 may depend on various parameters, such as for example on the geometric characteristics of the conveying apparatus 1, on the materials used to provide the conveying apparatus 1, on the properties of the processed food product, on the process parameters (capacity, pressure, etcetera). The intensity of each electromagnetic field generated by the induction device 8 may however depend on the desired temperature(s) that will be set in the control step.

## Claims

1. Conveying method, comprising the steps of: supplying a food product to an inlet (4) of a conveying tube (3); pumping said food product along said conveying tube (3) up to an outlet (5) of said conveying tube (3); during said pumping, heating said conveying tube (3) using an induction device (8); measuring at least one temperature along said conveying tube (3); and feedback regulating said induction device (8) to maintain said at least one temperature at a desired value.

2. Method according to claim 1, wherein said food product melts at a temperature below 90 °C and said desired value is below 90 °C.

3. Method according to claim 1 or 2, wherein said measuring step comprises measuring two or more temperatures at two or more detection points distant from each other along said conveying tube (3), and wherein said regulating step comprises feedback regulating said induction device (8) to maintain each of said two or more temperatures at a desired value; said desired value being, in particular, below 90 °C.

4. Method according to any one of the preceding claims, wherein said induction device (8) comprises two or more device portions arranged along said conveying tube (3) and regulated independently of each other.

5. Method according to claim 4, wherein each of said two or more device portions is operatively associated with at least one respective detection point and is feedback regulated to maintain the temperature of the respective detection point at a desired value; said desired value being, in particular, below 90 °C.

6. Method according to claim 4 or 5, wherein each of said two or more device portions comprises at least one induction coil (B1; B2; B3) arranged outside a respective section of said conveying tube (3).

7. Method according to any one of the preceding claims, wherein said food product is supplied to said inlet (4) of said conveying tube (3) at a temperature above 35 °C and/or below 90 °C.

8. Method according to any one of the preceding claims, wherein said desired temperature value is below 90 °C, or below 80 °C, or below 70 °C, or below 60 °C, or below 55 °C; said desired temperature value, in particular, being above 35 °C, or above 40 °C.

9. Method according to any one of the preceding claims, wherein said food product is solid at ambient temperature and melts at a temperature below 90 °C, and/or wherein said food comprises chocolate, or cocoa, or semi-finished cocoa products, and/or wherein a viscosity of said food product at 45 °C is comprised between 100 and 8000 mPa*s, and/or wherein a viscosity of said food product at 45 °C is comprised between 1600 and 8000 mPa*s, or comprised between 2500 and 6000 mPa*s, or comprised between 2500 and 8000 mPa*s, or comprised between 1600 and 6000 mPa*s.

10. Method according to any one of the preceding claims, wherein said induction device (8) comprises at least one induction coil (B1; B2; B3) wound around at least one section of said conveying tube (3) with a winding pitch greater than 2 cm, or greater than 3 cm, or greater than 4 cm, or comprised in a range of 4.5 ± 1.5 cm, or comprised in a range of 4.5 ± 0.5 cm.

11. Method according to any one of the preceding claims, wherein said conveying tube (3) has a relative magnetic permeability µr ≤ 10, or µr ≤ 8, or µr ≤ 6, or µr ≤ 4, or µr ≤ 2, considering that said relative magnetic permeability µr is measured with a magnetizing field H = 200 Aim and a temperature of the conveying tube (3) of 40 °C; said conveying tube (3) being, in particular, made of austenitic stainless steel, for example AISI 304.

12. Conveying apparatus (1), comprising:
- a conveying tube (3) with an inlet (4) and an outlet (5) for conveying a food product;
- pumping means (7) for pumping the food product along said conveying tube (3) from said inlet (4) to said outlet (5);
- an induction device (8) configured to heat said conveying tube (3);
- sensor means (S1; S2; S3) arranged to measure at least one temperature along said conveying tube (3); and
- control means configured to feedback regulate said induction device (8) so as to maintain the temperature measured by said sensor means at a desired value.

13. Apparatus according to claim 12, wherein said induction device (8) comprises two or more device portions which are arranged along said conveying tube (3), said sensor means (S1; S2; S3) measuring the temperature at two or more detection points distant from each other along said conveying tube (3), each of said two or more device portions being associated with at least one respective detection point, said control means being configured to feedback regulate said two or more device portions independently of each other to maintain the temperature of each of said two or more detection points at a desired value; each of said two or more device portions comprising, in particular, at least one induction coil (B1; B2; B3) arranged outside a corresponding section of said conveying tube (3).

14. Apparatus according to claim 12 or 13, wherein said induction device (8) comprises at least one induction coil (B1; B2; B3) wound around at least one section of said conveying tube (3) with a winding pitch greater than 2 cm, or greater than 3 cm, or greater than 4 cm.

15. Apparatus according to any one of claims 12 to 14, wherein said conveying tube (3) has a relative magnetic permeability µr ≤ 10, or µr ≤ 8, or µr ≤ 6, or µr ≤ 4, or µr ≤ 2, considering that said relative magnetic permeability µr is measured with a magnetizing field H = 200 Aim and a tube temperature of 40 °C; said conveying tube (3) in particular being made of austenitic stainless steel, for example AISI 304.
